# EUROPÄISCHE PATENTSCHRIFT

(11) **EP 2 085 168 B1**
(45) Veröffentlichungstag und Bekanntmachung des Hinweises auf die Patenterteilung: **05.06.2013**
(21) Anmeldenummer: 09000903.6
(22) Anmeldetag: 23.01.2009
(51) Int. Cl.: B23C 9/00

(54) **Reibrührschweiß-Werkzeugvorsatz zur Umrüstung von Fräsmaschinen**
Friction mixing welding tool header for retrofitting milling machines
Ensemble d'outils de ponçage par frottement-malaxage destiné à rééquiper des fraiseuses

(30) Priorität: 31.01.2008 DE 202008001344 U
(43) Veröffentlichungstag der Anmeldung: 05.08.2009
(73) Patentinhaber: IWE Innovativer Werkstoffeinsatz GmbH & Co. KG, 17489 Greifswald (DE)
(72) Erfinder: Meyer, Norbert, 17493 Greifswald (DE)
(74) Vertreter: Hübner, Gerd

(56) Entgegenhaltungen:
- EP-A1- 1 872 893
- JP-A- 2004 160 475
- US-A1- 2006 124 691
- US-A1- 2007 241 163

## Beschreibung

Gemäß dem Oberbegriff des Anspruchs 1. Ein solcher Reibrührschweiß-Werkzeug vorsatz ist aus dem Dokument US 2006/012 46 91 bekannt Die Erfindung betrifft einen Reibrührschweiß-Werkzeugvorsatz und dient zur Umrüstung von Fräsmaschinen auf die Funktion des Reibrührschweißens.

Das Reibrührschweißen (im Folgenden kurz FSW) setzt sich insbesondere beim Fügen von Aluminiumbauteilen wegen des geringen Wärmeeintrages und der Güte der Schweißnähte mehr und mehr durch. Allerdings sind die Anschaffungskosten für einen FSW-Automaten hoch, so dass sich das Verfahren nur langsam durchsetz.

Aus dem Stand der Technik sind Versuche bekannt, CNC-Fräsmaschinen für das FSW einzusetzen. Dies ist beispielsweise in dem Fachaufsatz von M. Zäh, D. Eireiner: "Rührreibschweißen mit NC-Fräsmaschinen", Schweißen und Schneiden 56 (2004) Heft 2 ausführlich behandelt. Die maschinentechnischen Gegebenheiten bei der dort offenbarten Verwendung eines starren Werkzeugeinsatzes bedingen eine umfangreiche Sensorik und die Steuerung der Maschine unter Einbeziehung dieser Daten. Es ist also eine erhebliche Hard- und Softwareaufrüstung der CNC-Fräsmaschine notwendig.

Aus der EP 1 872 893 A1 sind Werkzeugköpfe für FSW-Maschinen bekannt, bei denen Niederhalter zur Beaufschlagung der Werkstücke unter Spannung einer Druckfeder gesetzt werden können. Das eigentliche FSW-Werkzeug ist unabhängig davon in Richtung der Werkstücke unter entsprechender Steuerung der Zustellbewegung vorschiebbar. Auch diese Konzeptionen sind für eine einfache Umrüstung einer CNC-Fräsmaschine in eine FSW-Maschine nicht geeignet.

Der Erfindung liegt demgegenüber die Aufgabe zugrunde, einen Reibrührschweiß-Werkzeugvorsatz zu schaffen, mit dem herkömmliche NC-Fräsmaschinen problemlos für das Reibrührschweißen umgerüstet werden können.

Die Aufgabe wird durch die Kennzeichnungsteil des Anspruches 1 angegebenen Merkmale gelöst. Demnach ist vorgeschen
- ein Vorsatzkörper, der einen Anschlussflansch zum Einspannen in die Werkzeughalterung der Fräsmaschine aufweist,
- ein im Vorsatzkörper parallel zur Werkzeug-Rotationsachse verschiebbar geführter, relativ zum Vorsatzkörper drehfester Werkzeugeinsatz mit einem Reibrührschweißwerkzeug, und
- eine zwischen Vorsatzkörper und Werkzeugeinsatz gesetzte Druckfedereinheit, die den Werkzeugeinsatz in Eintauchrichtung des Reibrührschweißwerkzeuges mit einer durch deren Federkennlinie definierten Anpresskraft beaufschlagt, wobei das Reibrührschweißwerkzeug an dem Werkzeugeinsatz drehfest gehalten ist.

Der erfindungsgemäße Werkzeugvorsatz ermöglicht so das Reibrührschweißen an herkömmlichen CNC-Fräsmaschinen ohne Hard- bzw. Softwareaufrüstungen und somit einen unkomplizierten und preiswerten Einstieg in das Reibrührschweißverfahren. CNC-Fräsmaschinen sind nämlich üblicherweise weggesteuert, für das Reibrührschweißen ist jedoch eine Kraftsteuerung in z-Richtung erforderlich. Diese wird nun über das Druckfedersystem im FSW-Werkzeugvorsatz realisiert. Die Kenntnis der Federkennlinie, d.h. die Abhängigkeit der Kraft von der Feder-Stauchung, ermöglicht es, über die Wegsteuerung der z-Achse der Fräsmaschine die erforderlichen Anpresskräfte auf das FSW-Pin-Werkzeug kontrolliert aufzubringen und zu regeln. Durch Auswahl unterschiedlicher Druckfedern kann der erforderliche Kraftbereich eingestellt werden (z. B. 0 - 2500 N).

Der FSW-Werkzeugvorsatz besitzt am unteren Ende eine Aufnahme (z. B. Gewinde oder Morsekegel) für das eigentliche FSW-Pin-Werkzeug, das somit bei Verschleiß oder bei Änderung der Schweißgeometrie leicht ausgetauscht werden kann. Das obere Ende des FSW-Werkzeugvorsatzes ist so gestaltet, dass es in übliche Werkzeugaufnahmen der Fräsmaschine, z. B. ein Spannzangenfutter, eingespannt werden kann.

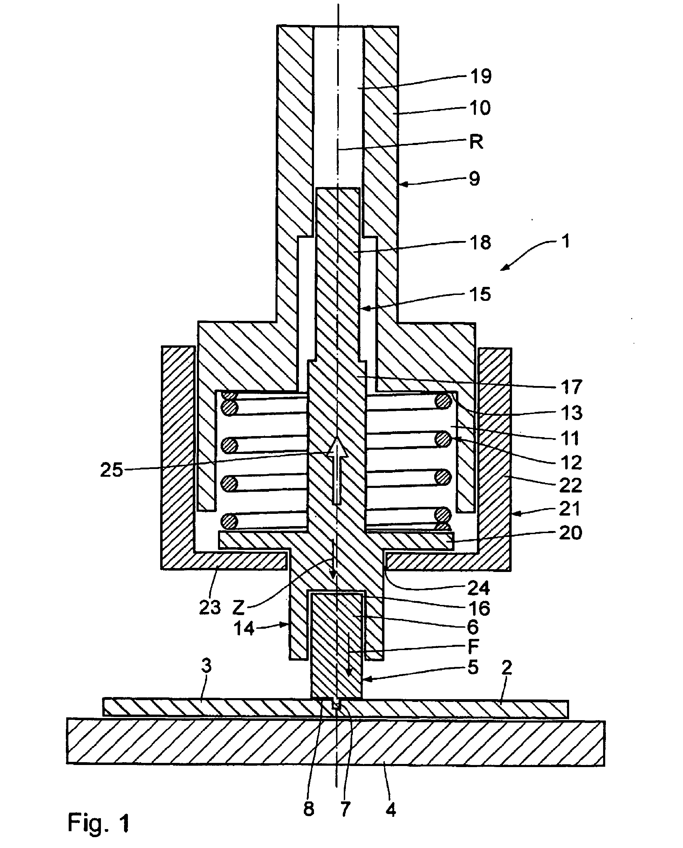

Weitere Merkmale, Vorteile und Einzelheiten der Erfindung ergeben sich aus der nachfolgenden Beschreibung, in der ein Ausführungsbeispiel anhand der beigefügten Zeichnung näher erläutert wird. Diese
- Fig. 1: zeigt einen schematischen Rotationsaxialschnitt eines Reibrührschweiß-Werkzeugvorsatzes.

Der als Ganzes mit 1 bezeichnete Werkzeugvorsatz dient zum Fügen der beiden aneinander stoßenden Werkstücke 2, 3 beispielsweise in Form von Aluminiumplatten, die auf einer gemeinsamen Werkstückauflage 4 positioniert und dort aufgespannt sind. Das Fügen erfolgt mit einem Reibrührschweißwerkzeug 5, dessen zylindrischer Schaft 6 an seiner zu den Werkstücken 2, 3 hinweisenden Stirnfläche einen zentral angeordneten Pin 7 aufweist, der von der durch die Schaft-Stirnwand gebildeten Ringschulter 8 umgeben ist. Zur Durchführung eines Reibrührschweißvorgangs muss das FSW-Werkzeug 5 unter Rotation um seine Rotationsachse R mit einer definierten Kraft F auf die Werkstücke 2, 3 abgesenkt werden, so dass der Pin 7 in Eintauchrichtung (z-Richtung) in die Fuge zwischen den Werkstücken 2, 3 eindringt und das Material der beiden angrenzenden Werkstücke 2, 3 miteinander "verrührt". Gleichzeitig wird das FSW-Werkzeug 5 entlang der anzulegenden Schweißnaht (x-Richtung) vorgeschoben.

Zur Durchführung dieses Schweißvorganges wird eine nicht dargestellte CNC-Fräsmaschine eingesetzt, die mit Hilfe des gezeigten Werkzeugvorsatzes 1 auch für ein Reibrührschweißen eingesetzt werden kann. Der Werkzeugvorsatz 1 weist dabei als tragendes Element einen Vorsatzkörper 9 auf, der an seiner den Werkstücken 2, 3 abgewandten Seite mit einem Anschlussflansch 10 zur Anbindung an die Werkzeugspannvorrichtung der Fräsmaschine versehen ist. In Eintauchrichtung Z vor dem Anschlussflansch ist der Vorsatzkörper 9 erweitert und bildet eine Aufnahmekammer 11, in der eine Druckfedereinheit 12 beispielsweise in Form von Schraubendruckfedern untergebracht ist.

Im Vorsatzkörper 9 ist ferner ein als Ganzes mit 14 bezeichneter Werkzeugeinsatz in Eintauchrichtung Z verschiebbar gelagert, an dessen Lagerkörper 15 das FSW-Werkzeug 5 in einer Aufnahme 16 drehfest beispielsweise mit Hilfe eines Gewindes oder eines Morsekegels, gehalten ist. Der Lagerkörper 15 weist einen langgestreckten Schaft 17 auf, dessen oberer Bereich als Führungsstange 18 in einer entsprechenden Führungsbohrung 19 im Anschlussflansch 10 entlang der Rotationsachse R verschiebbar geführt ist. Am entgegengesetzten Ende des Schaftes, das in Eintauchrichtung z durch die Druckfedereinheit 12 nach unten vorsteht, ist eine umlaufende Anschlagschulter 20 angelegt, an der sich die Druckfedereinheit 12 mit ihrem einen Ende abstützt. Das andere Ende liegt an der Decke 13 der Aufnahmekammer 11 an, so dass der Lagerkörper 15 und damit das FSW-Werkzeug 5 in Eintauchrichtung Z beaufschlagt werden. Vorsatzkörper 9, Druckfedereinheit 12 und Werkzeugeinsatz 14 werden durch ein Überwurfteil 21 zusammengehalten, das von unten auf den Vorsatzkörper 9 mit seiner Seitenwand 22 aufgeschraubt ist. Der Boden 23 des Überwurfteils 21 weist zentral eine nicht-rotationssymmetrische, also beispielsweise quadratische Durchstecköffnung 24 auf, durch die der Werkzeugeinsatz 14 mit dem die Aufnahme 16 beherbergenden, im Querschnitt entsprechend quadratischen Teil hindurchgreift.

Für die Durchführung eines Reibrührschweißvorganges wird die Werkzeugaufnahme der CNC-Fräsmaschine gemeinsam mit dem Werkzeugvorsatz 1 in z-Richtung nach unten bewegt, wobei mit dem Aufsetzen des FSW-Werkzeuges 5 und dem Eindringen des Pins 7 in die Werkstücke 2, 3 der Werkzeugeinsatz 14 relativ zum Vorsatzkörper 9 in Pfeilrichtung 25 verlagert wird. Damit übt die Druckfedereinheit 12 eine Druckkraft auf den Werkzeugeinsatz 14 aus, die für die notwendige Anpresskraft der Ringschulter 8 des FSW-Werkzeuges 5 auf den Werkstücken 2, 3 sorgt. Die Größe dieser Anpresskraft kann über den Verfahrweg der Fräsmaschine in z-Richtung eingestellt werden, da sich diese Druckkraft entsprechend der Federkennlinie der Druckfedereinheit 12 einstellt.

Für unterschiedliche Werkstoffe können durch Abnehmen des Überwurfteils 21 und des Werkzeugeinsatzes 14 sowie Austausch der Druckfedereinheit 12 unterschiedliche Bereiche von Anpresskräften erzielt werden. Die Druckfedereinheit 12 selbst kann dabei aus einer einzigen, aber auch zwei oder mehreren Druckfedern bestehen, die zueinander identisch, oder auch unterschiedlich sein können. In letzterem Falle kann ein Parameterwechsel bezüglich der Federkennlinie der Druckfedereinheit 12 stattfinden, indem nach dem völligen Stauchen der weicheren Feder dann die härtere Feder die Kennlinie der Druckfedereinheit 12 bestimmt. Das FSW-Werkzeug 5 selbst ist im Verschleißfall einfach zu wechseln.

## Patentansprüche

1. Reibrührschweiß-Werkzeugvorsatz zur Umrüstung von Fräsmaschinen auf die Funktion des Reibrührschweißens, wobei der Reibrührschweiß-Werkzeugvorsatz enthält
- einen Vorsatzkörper (9), der einen Anschlussflansch (10) zum Einspannen in die Werkzeughalterung der Fräsmaschine aufweist,
- einen im Vorsatzkörper (9) parallel zur Werkzeug-Rotationsachse (R) verschiebbar geführten, relativ zum Vorsatzkörper (9) drehfesten Werkzeugeinsatz (14) mit einem Reibrührschweißwerkzeug (5),
- eine zwischen Vorsatzkörper (9) und Werkzeugeinsatz (14) gesetzte Druckfedereinheit (12), die den Werkzeugeinsatz (14) in Eintauchrichtung (z) des Reibrührschweißwerkzeuges (5) mit einer durch deren Federkennlinie definierten Anpresskraft (F) beaufschlagt
**dadurch gekennzeichnet, dass**
das Reibrührschweißwerkzeug (5) an dem Werkzeugeinsatz (14) drehfest gehalten ist.

2. Werkzeugvorsatz nach Anspruch 1, **dadurch gekennzeichnet, dass** der Vorsatzkörper (9) mit einer Aufnahmekammer (11) versehen ist, in der die Druckfedereinheit (12) angeordnet ist.

3. Werkzeugvorsatz nach Anspruch 1 oder 2, **dadurch gekennzeichnet, dass** der Werkzeugeinsatz (14) mit einer Anschlagschulter (20) versehen, an der sich die Druckfedereinheit (12) abstützt.

4. Werkzeugvorsatz nach einem der vorgenannten Ansprüche, **gekennzeichnet durch** ein von der Werkzeugseite her auf den Vorsatzkörper (9) aufgesetztes Überwurfteil (21), **durch** das der Werkzeugeinsatz (14) greift und das dessen Verschiebebewegung in Eintauchrichtung (z) begrenzt.

5. Werkzeugvorsatz nach Anspruch 3 und 4, **dadurch gekennzeichnet, dass** die Anschlagschulter (20) des Werkzeugeinsatzes (14) als Begrenzungsanschlag mit einer Bodenwand (23) des Überwurfteils (21) kooperiert.

6. Werkzeugvorsatz nach Anspruch 4 oder 5, **dadurch gekennzeichnet, dass** das Überwurfteil (21) als Überwurfmutter ausgebildet ist, die auf den Vorsatzkörper (9) aufschraubbar ist.

7. Werkzeugvorsatz nach einem der Ansprüche 4 bis 6, **dadurch gekennzeichnet, dass** der Werkzeugeinsatz (14) zu seiner Drehblockierung gegenüber dem Vorsatzkörper (9) über eine rotationsunsymmetrische Öffnung (24) durch das Überwurfteil (21) greift.

8. Werkzeugvorsatz nach einem der vorgenannten Ansprüche, **dadurch gekennzeichnet, dass** der Werkzeugeinsatz (14) aus einem Lagerkörper (15) gebildet ist, an dessen werkzeugseitigen Ende eine Aufnahme (16) mit einem auswechselbar darin fixierten Reibrührschweißwerkzeug (5) angeordnet ist.

9. Werkzeugvorsatz nach einem der vorgenannten Ansprüche, **dadurch gekennzeichnet, dass** das die Druckfedereinheit (12) auswechselbar ist.

## Claims

1. Friction stir welding tool attachment for converting milling machines to perform friction stir welding, wherein the friction stir welding tool attachment contains
- an attachment body (9) which comprises a connecting flange (10) for fixing into the tool holder of the milling machine,
- a tool insert (14) with a friction stir welding tool (5) which tool insert is guided displaceably in the attachment body (9) parallel to the tool rotation axis (R) and is non-rotational in relation to the attachment body (9),
- a pressure spring unit (12) placed between the attachment body (9) and tool insert (14), which unit pressurises the tool insert (14) in the immersion direction (z) of the friction stir welding tool (5) with a pressing force (F) defined by its spring characteristic,
**characterised in that**
the friction stir welding tool (5) is secured in a non-rotational manner on the tool insert (14).

2. Tool attachment according to claim 1, **characterised in that** the attachment body (9) is provided with a mounting chamber (11) in which the pressure spring unit (12) is arranged.

3. Tool attachment according to claim 1 or 2, **characterised in that** the tool insert (14) is provided with a stop shoulder (20) on which the pressure spring unit (12) is supported.

4. Tool attachment according to one of the preceding claims, **characterised by** a coupling part (21) fitted from the tool side onto the attachment body (9), through which coupling part the tool insert (14) engages and limits its displacement movement in immersion direction (z).

5. Tool attachment according to claim 3 and 4, **characterised in that** the stop shoulder (20) of the tool insert (14) cooperates as a limiting stop with a bottom wall (23) of the coupling part (21).

6. Tool attachment according to claim 4 or 5, **characterised in that** the coupling part (21) is configured as a union nut which can be screwed onto the attachment body (9).

7. Tool attachment according to one of claims 4 to 6, **characterised in that** for blocking its rotation the tool insert (14) engages relative to the attachment body (9) via a rotationally non-symmetrical opening (24) through the coupling part (21).

8. Tool attachment according to one of the preceding claims, **characterised in that** the tool insert (14) is formed by a bearing body (15), at the tool-side end of which a mount (16) is arranged with a friction stir welding tool (5) fixed replaceably therein.

9. Tool attachment according to one of the preceding claims, **characterised in that** the pressure spring unit (12) can be replaced.

## Revendications

1. Ensemble d'outils de ponçage par frottement-malaxage destiné au rééquipement de fraiseuses pour la fonction de ponçage par frottement-malaxage, l'ensemble d'outils de ponçage par frottement-malaxage comprenant
- un prolongement (9) qui présente une bride de raccordement (10) pour la fixation de la fraiseuse dans le support d'outils,
- une pointe d'outil (14), fixée solidement, en ne pouvant pas tourner par rapport au prolongement (9), pouvant être déplacée en coulissant dans le prolongement (9) parallèlement à l'axe de rotation de l'outil (R), comprenant un outil de ponçage par frottement-malaxage (5)
- un ensemble de ressorts de compression (12), placé entre le corps d'outil (9) et la pointe d'outil (14), qui introduit la pointe d'outil (14) en direction de l'enfoncement (z) de l'outil de ponçage par frottement-malaxage (5) avec une force de compression (F) définie par sa courbe caractéristique de ressort
**caractérisé en ce que**
l'outil de ponçage par frottement-malaxage (5) est maintenu solidement, sans pouvoir tourner, sur la pointe d'outil (14).

2. Ensemble d'outils selon la revendication 1 **caractérisé en ce que** le prolongement (9) est muni d'une chambre d'admission (11) dans laquelle est disposé l'ensemble de ressorts de compression (12).

3. Ensemble d'outils selon les revendications 1 ou 2 **caractérisé en ce que** la pointe d'outil (14) est pourvue d'un épaulement d'appui (20) sur lequel l'ensemble de ressorts de compression (12) est soutenu.

4. Ensemble d'outils selon l'une des revendications précitées **caractérisé par** une partie de rabattement (21), posée sur le prolongement (9) à partir du côté de l'outil, laquelle est traversée par la pointe d'outil (14) et dont un mouvement de coulissement limite la direction de l'enfoncement (z).

5. Ensemble d'outils selon les revendications 3 et 4 **caractérisé en ce que** l'épaulement d'appui (20) de la pointe d'outil (14) coopère en tant que butée de limitation avec une paroi du fond (23) de la partie de rabattement (21).

6. Ensemble d'outils selon les revendications 4 ou 5 **caractérisé en ce que** la partie de rabattement (21) est conçue sous la forme d'un écrou à chapeau qui peut être vissé sur le prolongement (9).

7. Ensemble d'outils selon l'une des revendications de 4 à 6 **caractérisé en ce que** la pointe d'outil (14) traverse la partie de rabattement (21) dans sa position de blocage contre la rotation par rapport au prolongement (9) par l'intermédiaire d'une ouverture (24) non symétrique en rotation.

8. Ensemble d'outils selon l'une des revendications précitées **caractérisé en ce que** la pointe d'outil (14) est formée d'un corps de palier (15) sur lequel une admission (16) comprenant un outil de ponçage par frottement-malaxage (5) y étant fixé de manière interchangeable, est disposée à son extrémité située vers l'outil.

9. Ensemble d'outils selon l'une des revendications précitées **caractérisé en ce que** l'ensemble de ressorts de compression (12) est interchangeable.
